# EUROPEAN PATENT APPLICATION

(11) **EP 4 307 100 A1**
(43) Date of publication of application: **17.01.2024**
(21) Application number: 23184538.9
(22) Date of filing: 10.07.2023
(51) Int. Cl.: G06F 3/14, G09G 3/20, G09G 5/00

(54) **SWITCHING APPARATUS**

(30) Priority: 15.07.2022 GB 202210437
(71) Applicant: Amulet Hotkey Ltd, Newton Abbot Devon TQ12 6TQ (GB)
(72) Inventor: COPELAND, Sean, Austin, TX 78741 (US)
(74) Representative: Barker Brettell LLP

(57) **Abstract**

A switching apparatus (10) for allowing a user to provide an input (2; 3) to determine which one of multiple computer systems (C1; C2; C3; C4) a user input apparatus provides commands to, and the visual display apparatus (D1; D2; D3; D4) is arranged to display a respective display output of each of multiple computer systems, and wherein, the switching apparatus arranged to bring about a selection signal (5) which is indicative to the user of which computer system the user input apparatus is connected to.

## Description

### TECHNICAL FIELD

This invention relates generally to computer switching systems.

### BACKGROUND

Known forms of computer user control devices include mice, keyboards, roller balls and touch pads. Each such control device allows a user to move a pointer on one or more displays so as to provide an input/command to cause a computer to perform a required function.

In certain scenarios, multiple, distinct computer systems may be accessible to a user by way of one or more displays and the user control device, in which a user is able to use any of said multiple host systems with the user control device (and the visible output from each system is provided on the one or more displays, hereinafter referred to as the 'visual display apparatus').

Each such computer system may include a PC, MAC, laptop, server, personal electronic device (PED), and more broadly any data processor device or computer device which provides an output responsive to a user's input. Each computer system may be located local to the visual display apparatus and user control device, or remotely therefrom. Each such system may be physically distinct from the one or more other computer systems. Each such computer system may host one or more (software) applications, which perform respective functions, such as access to and manipulation or processing of data.

We have devised an improved user control device for use in such a context.

### SUMMARY

According to one aspect of the invention there is provided a switching apparatus for allowing a user to provide an input to select which one of multiple computer systems a user input apparatus provides commands to, and the visual display apparatus is arranged to display a respective display output of each of multiple computer systems, and wherein, the switching apparatus arranged to bring about a selection signal which is indicative to the user of which computer system the user input apparatus is connected to.

The selection signal may include a visual and/or audio and/or haptic signal. A haptic signal may include a vibration or 'buzz' output, or which can otherwise be sensed by touch.

The switching apparatus may be configured to allow a user controlled position of a pointer icon on a visual display apparatus to determine which one of multiple computer systems a user input apparatus provides commands to.

The switching apparatus may be viewed as determining or selecting which computer system to connect input signals from the user input device to based at least on a determined position of the pointer icon on the visual display apparatus.

`Pointer icon' is to be interpreted broadly as including a moveable graphical image used to activate or control certain elements in a graphic user interface of an application or an operating system, and indicates where in the graphic user interface an action is to be performed, such as opening a file, selecting text and activating a function. It will be appreciated that a pointer icon need not be arrow-shaped, and could be of any shape or two-dimensional form or graphic manifestation.

The material displayed, which is output to the display apparatus by the computer systems may include text, graphics, pictures, and video material, for example.

The selection signal may comprise a coloured border.

The selection signal may comprise an icon or symbol.

The selection signal may comprise a change in the visible attributes of displayed material, such as a change in colour or tone of text and/or a change in colour or tone of a background on which material is displayed.

The selection signal may be the same, or substantially the same, for the selection of some or each of the display outputs. The selection signal may differ for each of the output displays.

A visual selection signal may be provided by the visual display apparatus, and specifically by the respective display output.

A visual selection signal may include generating a visual signal at or proximal to a periphery or border of a display output. The selection signal may be static or may be intermittent or dynamic (such as flashing). A selection signal may include a pattern or an array of shapes, and/or may include text.

The selection signal may be generated for all, or substantially all, of the duration for which the pointer icon is positioned within a respective display output (until it is caused to be moved to another respective display output by the user).

The selection signal may be generated for only part of duration for which the pointer icon is positioned within a particular display output. For example, the selection signal may be generated for a predetermined time after the pointer icon enters a different display output. Thereafter, the selection signal may be generated only when the user moves the pointer (within a currently selected display output) and/or generates a command input to the respective computer system, which may be for a predetermined time, and not for the full duration of the pointer icon being in a display output).

The selection signal may be generated only in respect of the display output into which the pointer icon has been positioned, and not in respect of any other display outputs.

The visual display apparatus may comprise multiple display units, in which each display unit may provide a respective display output for a computer system. The visual display apparatus may comprise a (unitary) display unit in which a display area, and more specifically a display screen, is divided into regions, such as into two regions (such as two halves), or into four regions (such as four quadrants). Each region may provide a respective display output for a computer system. This may be achieved by assigning different groups of pixels (each group defining a region) for different display outputs. Such a display unit may be termed a common, or shared, visual display device.

The visual display apparatus may comprise a combination of (unitary and physically distinct) display units, each such unit providing a respective one display output, and a display unit which provides multiple display outputs, with each of multiple display outputs assigned a particular region of the display area of the (latter) display unit.

The visual display apparatus may comprise one or more display screens or monitors.

Whilst it is envisaged that all display outputs would be simultaneously displayed, this is not necessary, and it is also possible that a subset of display outputs, which may be determined by the user, is displayed at a particular time. The switching apparatus may be configured to allow a user to select which and/or how many of the computer system display outputs are visible to the user. The switching apparatus may allow for a user to move between a first subset of display outputs being displayed and a second subset of display outputs being displayed and *vice versa.* There may be more two selectable subsets. Where a single visual display unit is used, the user can select which subset of display outputs is displayed by the unit.

The switching apparatus may be arranged to cause the display output of one or more non-selected computer systems to be partially or substantially obscured or obfuscated, so that any displayed text or other displayed material, is less visually discernible as compared to when any of said non-selected computer systems is selected. The obfuscation may include overlaying or superimposing a pattern or tone over the displayed material. The obfuscation may include applying a blurring of the displayed material. The obfuscation may include reducing the clarity or brightness of displayed material.

The display outputs of computer systems which are not selected at any one time may be referred to as non-active display outputs.

The switching apparatus may include a switch which is controllable to determine which of the two or more computer systems the user provides inputs to.

The switching apparatus may be incorporated or integrated into the display apparatus, or may be a device which is separate therefrom.

The switching apparatus may be arranged to monitor the position, or change in position, of the pointer icon. The switching apparatus may be arranged to receive signals indicative of the same. More generally the switching apparatus may be arranged to determine or receive signals indicative of at least one of: a position of the pointer icon, a change in position of the pointer icon, when the pointer icon has been moved out of a display output and a display output to which the pointer icon has been moved.

The switching apparatus may comprise a processor. The processor may be arranged to receive signals from the computer systems indicative of when the pointer has been controlled to be moved out of the display output boundary of a respective computer system. However, such as when the switching apparatus is incorporated or integrated with a single display unit (which provides multiple regions, each of which for a respective computer system), the processor may directly monitor the position of the pointer on the display screen, and thereby determine which of the computer systems user inputs are to be directed to.

The switching apparatus may comprise an input port which is arranged to be connected to the user input device. The switching apparatus may include one or more input ports which are arranged to be connected to one or more computer systems.

The switching apparatus may comprise an output which is arranged to be connected to the display apparatus.

The switching apparatus may be considered as providing multiple selectable channels between the user input apparatus and the computer systems, wherein by determining in which display output the pointer is positioned, a respective connection is made.

The switching apparatus may be arranged to perform a switch in connections from the user input apparatus and a first computer system to connection between said user input apparatus and a second computer system when the pointer icon passes a boundary which delineates the display output associated with the first computer system to the display output of the second computer system, where the first and second display outputs are adjacent.

There may be provided a dedicated device (which may be additional to any keyboard or mouse or trackpad) for selecting which computer system is connected for user input. This could be a push button device, which may be incorporated with the visual display apparatus. Each attached computer system may have a dedicated button. Alternatively or in addition, switching between different computer systems may be implemented by function keys, or by keys pressed in a particular sequence or simultaneously.

Computer system switching may be achieved by mouse or trackpad commands in which the user presses a predetermined combination of one more mouse/trackpad buttons which the switch can interpret as a command to switch to a different computer system.

When switching is brought about other than by repositioning of the pointer icon, the switching apparatus may be configured to reposition the pointer icon in the respective display output in response to a user input, and position the pointer icon at a predetermined position in the selected display output.

The user input apparatus may comprise at least one of:
a mouse
a trackpad
a trackball
a touch screen
a keyboard

According to a second aspect of the invention there is provided a computer network comprising:
multiple computer systems
a visual display apparatus
switching apparatus
user input apparatus
wherein, a switching apparatus for allowing a user to provide an input to determine which one of multiple computer systems a user input apparatus provides commands to, and the visual display apparatus is arranged to display a respective display output of each of multiple computer systems, and wherein, the switching apparatus arranged to bring about a selection signal which is indicative of which computer system the user input apparatus is connected to.

The multiple computer systems may not be (directly) connected to one another, including in relation to direct transfer of data. Each computer system may be viewed as a distinct and separate domain. This includes that it is not possible for a user to select material shown in one display output to a location in another.

Any of the above aspects of the invention may comprise one or more features (either individually or in combination) as described in the description and/or as shown in the Figures.

### BRIEF DESCRIPTION OF THE DRAWINGS

Various embodiments of the invention, provided by way of example only, in which:
**Figure 1** is a schematic diagram of a multi computer installation which includes a switching apparatus;
**Figure 2** is a schematic diagram of the switching apparatus of the installation of Figure 1;
**Figure 3** is a schematic diagram of the installation of Figure 1 in use in a first condition;

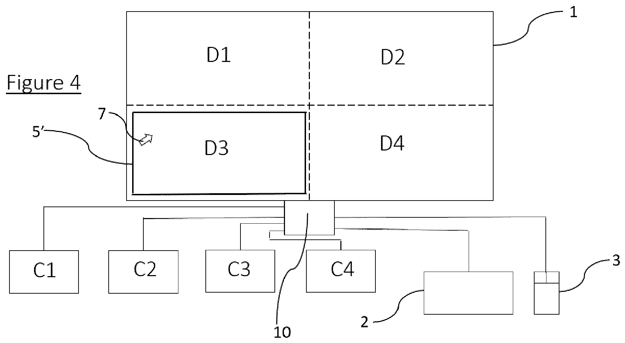

**Figure 4** is a schematic diagram of the installation of Figure 1 in use in a second condition;
**Figure 5** is a schematic diagram of the installation of Figure 1 in a third condition; and
**Figure 6** is a schematic diagram of a second embodiment of a multi computer installation.

### DETAILED DESCRIPTION

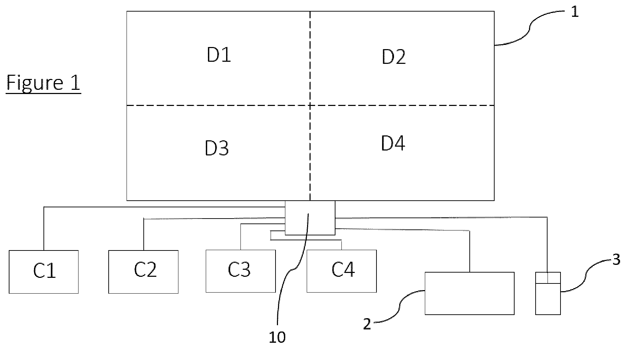

With reference initially to Figure 1, there is shown a novel computer network which comprises a display screen 1, a keyboard 2, mouse 3, multiple computer systems C1, C2, C3 and C4. As will be described in more detail below, the display screen 1 comprises a switch 10 which is arranged to connect the keyboard and mouse to one of the computer systems, dependent on which part of the display screen a pointer icon is located.

The display screen 1 comprises a display area which is divided into four quadrants, D1, D2, D3 and D4. Each of D1, D2, D3 and D4 is a display output of a respective computer system. In other words, each of D1 to D4 occupies its own (or is mapped onto a) set of pixels, which is defined and contained within a boundary (which is shared with an adjacent display output). It is not necessary that there is any physical border or partition between the quadrants (such as bezels).

The display screen 1 comprises connector ports to which each of the computer systems is connected. The display screen 1 also comprises connector ports arranged to receive connectors of the keyboard 2 and the mouse 3, which allow a user to provide control signals to a selected one of the computer systems.

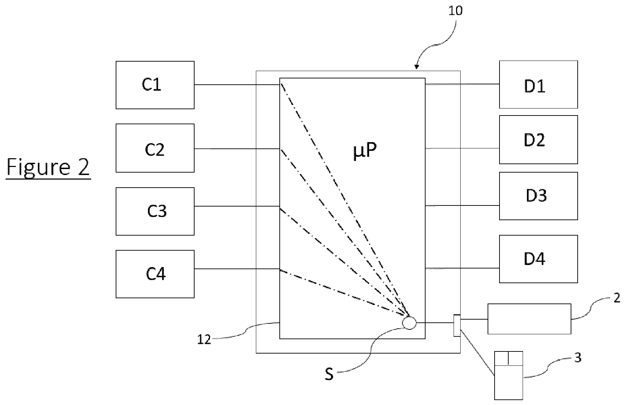

Reference is made to Figure 2, which shows the switching apparatus 10, which comprises a processor 12, a memory and a switch S, as well as various interconnections as shown. In this arrangement, the processor is configured to provide a control signal to the switch S. This is achieved by the monitoring of the position of the pointer icon, and determining in which quadrant it is positioned at any one time. As can be seen, the processor 12 is provided with a connection from the switch S (selectively) to each computer system as shown by the broken lines. Each connection allows the inputs from either of the keyboard 2 or the mouse 3 to be sent to a respective computer system. The switching apparatus 10 is provided with machine executable instructions which enable the signals and data from the computer systems to be shown on the display screen, and more specifically for the output from each respective computer system to be shown in a respective quadrant. During an initial set up/configuration procedure, a user may determine to which quadrant each computer system is assigned (or this may be done automatically in accordance with preconfigured set-up instructions). The instructions allow also the instantaneous position of the pointer icon to be monitored and to control the switch S accordingly. The instructions additionally bring about a selection signal which provides an indication output to the user as to which of the computer systems is connected to the mouse and keyboard, as a result of the user moving the pointer icon from one quadrant to another. Said instructions may be provided as a software mat or be embodied in firmware, or the like/similar, and may be termed a driver or an operating system. The connections provided between the output displays and the computer systems may be seen as creating four channels, with the keyboard 2 and the mouse 3 being selectively connectable to a required channel. The switching apparatus may be viewed as providing a routing functionality in which input signals from the keyboard 2 and the mouse 3 are routed dependent on which computer system has selected at any particular moment.

Whilst D1, D2, D3 and D4 are of the same size, in an alternative embodiment one or some may be of different sizes (i.e. dimensions) to the others. For example, for a three computer system arrangement, D1 and D2 become the output display of the first computer system, and D3 and D4 are the output displays of the second and third systems.

As a possible alternative to the switching apparatus (directly) monitoring the position of the pointer icon, pointer icon positioning information could be obtained from the relevant computer system. The pointer icon movement activity brought about by the user could be monitored by a currently selected computer system, for example by comparing the absolute mouse pointer position with the size of the respective output display. When the host computer determines that the position of the pointer icon has passed a boundary of the respective output display, this is communicated to the switching apparatus.

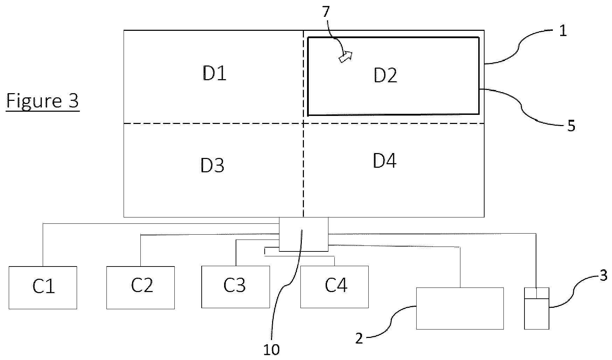

Reference is now made to Figure 3. In this, the user has controlled the mouse 3 to position a pointer icon 7 into the output display D2, which provides visual output for the computer system C2. As a result, the switching apparatus causes a selection signal 5 to be shown, which is a coloured border which is adjacent to the defining periphery of D2. This provides a clear visual indication to the user that they are connected to computer system C2.

If the user now controls the mouse 3 to cause the pointer icon to move into output display D3, the selection signal 5 which is generated in D2 is extinguished and a selection signal 5' is generated in D3.

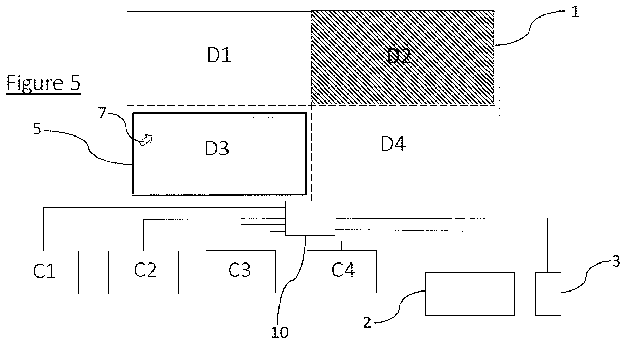

Figure 5 shows a further embodiment. In this embodiment, the output display D2 which is non-active as shown (since the pointer icon is in D3), and has applied to it an obfuscation. In the example shown, a pattern of diagonal lines is applied which causes the material presented by D2 to be fully or partially indiscernible (or discernible with difficulty). It may be that the computer system C2, which is connected to D2, contains sensitive data. If the user causes the pointer to move back to D2, then the obfuscation is removed, and the selection signal re-applied.

It will be appreciated that a selection signal (and / or any obfuscation) may be caused to be generated as part of the data sent by one some or all of the computer systems when the pointer icon passes from one output display to another, as opposed to this being part of the functionality of the switching apparatus. In such an arrangement, the switching apparatus may monitor the position of the pointer icon, and signal to a relevant computer system when the pointer icon is positioned in its domain.

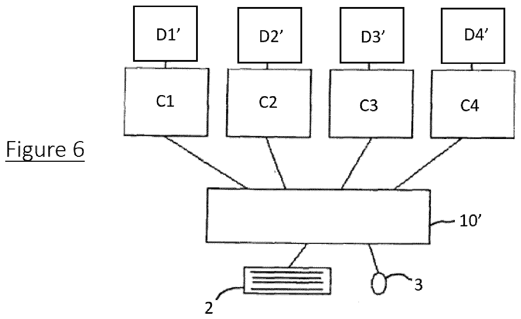

Figure 6 shows a computer network in which each of computer systems C1, C2, C3 and C4 has a its own monitor D1', D2', D3' and D4', which monitors are positioned side-by-side. A switching apparatus 10' is provided which is a separate unit to the monitors and to the computer systems, and the switching apparatus 10' comprises a number of ports or connectors which allow the computer systems to be connected to the switching apparatus 10' . The switching apparatus implements the same or similar functionality to that described above in relation to the switching apparatus 10. When, for example, the user causes the pointer icon to re-position pointer to an adjacent monitor the pointer appears to jump the gap between the display screens. Alternatively, the pointer icon may be caused to appear at a predetermined position (such as a central position) in the `new' display monitor when its position is caused to exceed the area of the previous monitor.

It will be appreciated that the switching device may be arranged to allow a user some degree of user-configurability, which may include selecting preferred characteristics (be they visual, audio and/haptic) of how selected display outputs and non-active outputs are indicated to the user.

It is to be noted that the computer systems are separate in their own rights, and are not connected to one another such that there is data separation between them. Each computer system may be viewed having its own (data) domain which is distinct from domains of other of the computer systems. This characteristic includes that it is not normally possible to use a cut-and-paste or copy function to transfer material (such as text) shown in one output display to a location in another (despite the fact that this may appear to possible, especially when there are multiple display outputs (each from a different computer system) shown on different regions of a single visual display unit), and there is a single/common user input device (such as a mouse and a keyboard).

In any of the above embodiments, the user may be able to configure how a selected computer system is shown as being selected and/or how non-selected computer systems are indicated to the user. Each computer system may be viewed as a data domain, and in the above embodiments the user is advantageously able to differentiate, to the user, by data domain.

It will be appreciated that whilst four display outputs are disclosed in the embodiments above, any number from two upwards can be realised.

## Claims

1. A switching apparatus for allowing a user to provide an input to determine which one of multiple computer systems a user input apparatus provides commands to, and the visual display apparatus is arranged to display a respective display output of each of multiple computer systems, and wherein, the switching apparatus arranged to bring about a selection signal which is indicative to the user of which computer system the user input apparatus is connected to.

2. The switching apparatus as claimed in claim 1 which is configured to allow a user-controlled position of a pointer icon on a visual display apparatus to determine which one of multiple computer systems a user input apparatus provides commands to.

3. The switching apparatus as claimed in claim 1 or 2 in which the selection signal comprises a graphical manifestation in a display output.

4. The switching apparatus as claimed in any preceding claim in which the selection signal is static, dynamic and/or time-varying.

5. The switching apparatus as claimed in any preceding claim in which the selection signal is generated for all, or substantially all, of the duration for which a selected one of the computer systems is connected to the user input apparatus.

6. The switching apparatus comprises a switch which is controllable to determine which of the two or more computer systems the user provides inputs to.

7. The switching apparatus of any preceding claim which is configured to monitor the position, or change in position of a pointer icon.

8. The switching apparatus as claimed in any preceding claim which is arranged to determine or receive signals indicative of at least one of: a position of the pointer icon, a change in position of the pointer icon, when the pointer icon has been moved out of a display output and a display output to which a pointer icon has been moved.

9. The switching apparatus as claimed in any preceding claim which is arranged to determine in which region of a display screen a pointer icon is located, wherein each region is a respective display output, and/or in which of multiple display screens the pointer icon is located.

10. The switching apparatus as claimed in any preceding claim which comprises a connection port which is arranged to be connected to the user input apparatus, and a plurality of ports which are arranged for connection to the computer systems.

11. The switching apparatus as claimed in any preceding claim which is incorporated or integrated into the display apparatus.

12. A computer network comprising:
multiple computer systems;
a visual display apparatus;
switching apparatus; and
user input apparatus;
wherein, the switching apparatus determines which one of multiple computer systems a user input apparatus provides commands to, and the visual display apparatus is arranged to display a respective display output of each of multiple computer systems, and wherein, the switching apparatus arranged to bring about a selection signal which is indicative of which computer system the user input apparatus is connected to.
